# EUROPEAN PATENT APPLICATION

(11) **EP 2 251 724 A1**
(43) Date of publication of application: **17.11.2010**
(21) Application number: 09006500.4
(22) Date of filing: 14.05.2009
(51) Int. Cl.: G02B 6/30, G02B 6/122

(54) **Fiber optic furcation module**

(71) Applicant: CCS Technology Inc., Wilmington, DE 19803 (US)
(72) Inventor: Andrzejewski, Tomasz, 95-100 Zgierz. (PL); Tosik, Grzegorz, 98-113 Buczek (PL)
(74) Representative: Sturm, Christoph

(57) **Abstract**

The invention relates to a fiber optic furcation module (10), comprising: at least one planar wave guide card (15); a first adapter (11) assigned to the or each planar wave guide card (15), the or each first adapter (11) comprising a plurality of adapter ports (13) for optical fibers terminated in an optical fiber ribbon connector; a plurality of second adapters (12) assigned to the or each planar wave guide card (15), each of said second adapters (12) camp rising one adapter port or two adapter ports (14), the one/or two adapter ports (14) being operative to receive respective single optical fiber connectors terminated with single optical fibers; a plurality of waveguide channels (16) provided by the or each planar wave guide card (15), the waveguide channels (16) providing optical traces being operative to transmit and/or receive optical wave- length signals and connecting each adapter port (13) of a first adapter (11) with an adapter port (14) of one of said second adapters (12).

## Description

The invention relates to a fiber optic furcation module.

Coming Cable Systems Plug&Play™ Universal System brand LANscape® Pretium® is a preterminated optical fiber cabling system particularly used in data center applications. Such a system comprises various components, including so-called CCH (Closet Connector Housing) modules. A plurality of such CCH modules can be positioned in housing, whereby a plurality of housings can be mounted to a rack. The LANscape® Pretium® system belongs in principle to the prior art.

A CCH module of the LANscape® Pretium® system is used to provide a furcation function, namely to break out a 12 fiber ribbon connector being preferably a MTP connector into simplex or duplex style single fiber connectors. Such a CCH module comprises one or two first adapters to which a ribbon fiber connector is connectable. Each first adapter comprises a plurality of adapter ports for optical fibers terminated in a ribbon fiber connector. Such a CCH module comprises further a plurality of second adapters to which single fiber connectors are connectable. Each second adapter comprises one adapter port or two adapter ports for optical fibers terminated in single fiber connectors. A factory-installed and tested optical fiber assembly positioned inside such a CCH module connects each adapter port of the or each first adapter to an adapter port of the second adapters thereby providing the furcation function or break out function.

The CCH modules known from the prior art have a depth of around 90 mm. For the use of such modules in so-called Next Generation Data Centers ("NGDCs") the depth of the modules needs to be reduced. NGDCs denote data centers, which will be smaller, better integrated, of reduced footprint and with improved ventilation. These factors are needed in order to decrease the total cost of ownership in collocation rooms for the operators, facilitate the installers in their work and finally decrease the power consumption of computer room air conditioners. In view of the above described tendency, the depth of CCH modules known from the prior art has become too big.

Actions that could be taken with the optical fibers of the optical fiber assembly positioned inside such a CCH module would allow to reduce the depth to around to 40-50 mm. However, a much smaller depth for such a fiber optic furcation module is wanted for the use in NGDCs.

Against this background, the present invention is based on the object of providing a novel fiber optic furcation module having a reduced depth. This problem is solved by a fiber optic furcation module according to claim 1.

The fiber optic furcation module according to the invention comprises at least one planar wave guide card; a first adapter assigned to the or each planar wave guide card, the or each first adapter comprising a plurality of adapter ports for optical fibers terminated in an optical fiber ribbon connector; a plurality of second adapters assigned to the or each planar wave guide card, each of said second adapters comprising one adapters port or two adapter ports, the one or two adapter ports being operative to receive respective single optical fiber connectors terminated with single optical fibers; a plurality of fiber optic transmission channels provided by the or each planar wave guide card, the fiber optic transmission channels providing optical traces being operative to transmit and/or receive optical wavelength signals and connecting each adapter port of a first adapter with an adapter port of one of said second adapters.

The basic idea of the invention is to replace an optical fiber assembly positioned inside a furcation module by a planar wave guide card.

The planar waveguide card leverages the quickest possible route from the or each first adapter to the second adapters. The permissible bend diameters of the optical fibers of an optical fiber assembly are no longer critical, since with a planar waveguide card small widths of optic transmission channels within the planar waveguide card and tight bend diameters at the same time can be provided. Moreover, the planar waveguide card reduces the adapter size, which no longer protrudes into the module. All that leads to a fiber optic furcation module having a very compact depth, which never before has been achieved. The invention allows reduction of the depth of a fiber optic furcation module to 5-10 mm.

According to a preferred embodiment of the invention each adapter port of the or each first adapter and each second adapter comprises a mode conditioning element and a waveguide funnel.

The mode conditioning element provides the conversion of the size of the light mode to be transmitted within a fiber optic transmission channel of the planar wave guide card.

The waveguide funnel of each adapter port provides a smooth transition between the fiber optic transmission channel of the planar wave guide card and a fiber core of an optical fiber terminated in a fiber optic connector being connectable to the respective adapter port.

Preferred developments of the invention are given in the dependent claims and the description below. Exemplary embodiments will be explained in more detail with reference to the drawing, in which:
- figure 1: shows a front view of a fiber optic furcation module according to the present invention;
- figure 2: shows a back view of a fiber optic furcation module according to the present invention;
- figure 3: shows a schematic cross-sectional view though the fiber optic furca- tion module according to the present invention along the direction III- III in figures 1 and 2;
- figure 4: shows a preferable layout of a planar waveguide card; and
- figure 5: shows a detail of an adapters port of the fiber optic furcation module according to the present invention including a mode conditioning element and a waveguide funnel.

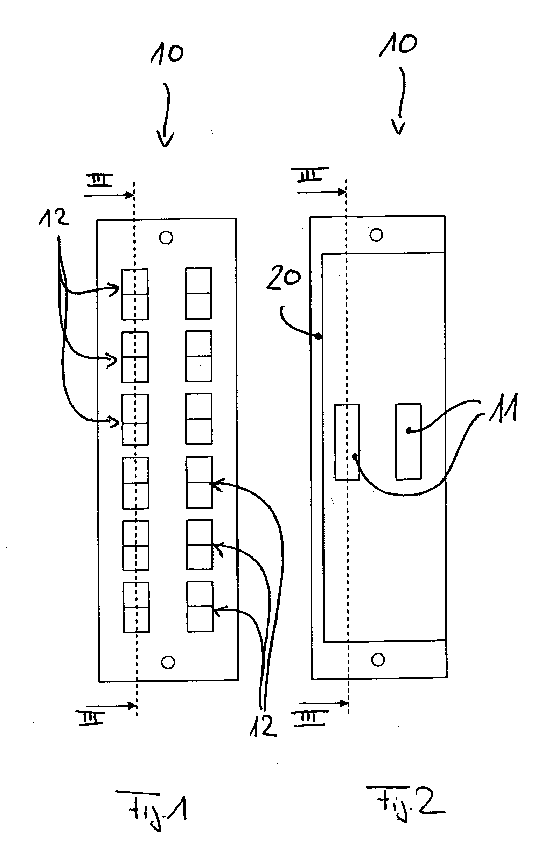

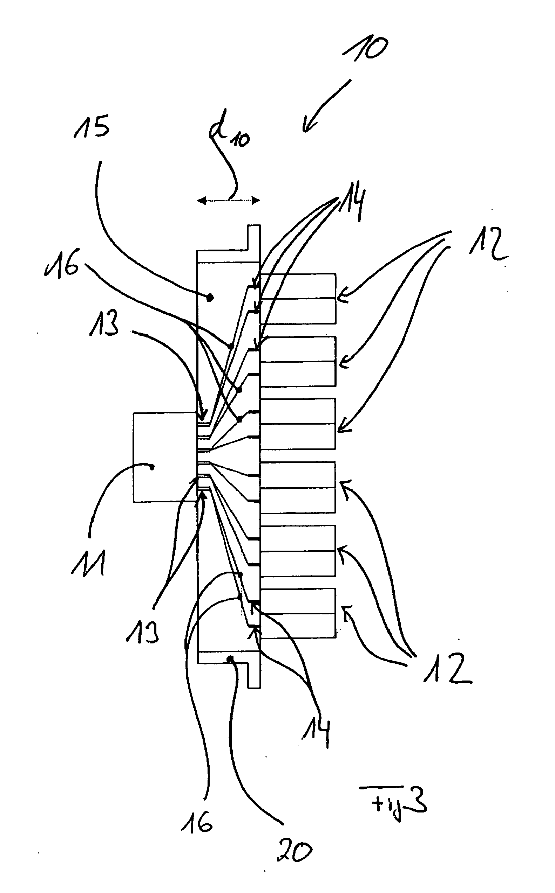

Figure 1 shows a front view and figure 2 shows a back view of a preferred embodiment of fiber optic furcation module 10 according to present invention, whereby figure 3 shows a cross-sectional view though said fiber optic furcation module 10.

The fiber optic furcation module 10 according to figures 1 to 3 comprises two first adapters 11 positioned at the back side of the fiber optic furcation module 10 and a plurality of second adapters 12 positioned at the front side of the fiber optic furcation module 10. Each first adapter 11 comprises a plurality of adapter ports 13 for optical fibers terminated in a ribbon fiber connector. Each second adapter 12 comprises two adapter ports 14 for optical fibers terminated in single fiber connectors.

In the preferred embodiment shown in figures 1 to 3, the two first adapters 11 are designed as MPO adapters, especially as MTP adapters. Each of the two MPO adapters 11 comprises twelve adapter ports 13 for twelve optical fibers terminated in a ribbon fiber connector.

In the preferred embodiment shown in figures 1 to 3, the second adapters 12 are designed as duplex adapters each having two adapter ports 14 for two optical fibers each terminated in a single fiber connector.

Each of the twelve adapter ports 13 of an MPO adapter 11 is optically connected to an adapter port 14 of one duplex adapters 12 being positioned in a row of six duplex adapters 12.

The fiber optic furcation module 10 according to figures 1 to 3 further comprises two planar wave guide cards 15. To each planar wave guide card 15 there is assigned one of the first adapters 11 and a plurality of the second adapters 12. In the preferred embodiment shown in figures 1 to 3, to each planar wave guide card 15 there is assigned one MPO adapters 11 having twelve adapter ports 13 for twelve optical fibers terminated in a ribbon fiber connector and six duplex adapters 12 each having two adapter ports 14 for two optical fibers each terminated in a single fiber connector.

According to the shown embodiment, the first adapter 11 and said plurality of second adapters 12 are assigned to opposite sides of each planar wave guide card 15. However, it should be noted that it is also possible that the first adapter 11 and the plurality of second adapters 12 are assigned to the same side of each planar wave guide card 15.

In the preferred embodiment shown in figures 1 to 3, the two planar wave guide cards 15 are mechanically cascaded in a way that a first planar wave guide card 15 is mounted to a supporting frame 20 (see figures 2, 3) and that a second planar wave guide card 15 is mounted to the first planar wave guide card 15. The fiber optic furcation module 10 can be mounted to a housing through said supporting frame 20, whereby a plurality of such fiber optic furcation modules 10 are typically mounted to a housing.

The first adapter 11 being preferably a MPO adapter and the plurality of second adapters 12 being preferably duplex adapters which are assigned to each planar wave guide card are halves of standard MPO or standard duplex adapters.

Each planar wave guide card 15 provides a plurality of fiber optic transmission channels 16 running within the respective planar wave guide card 15 and connecting each adapter port 13 of each first adapter 11 to an adapter port 14 of one of said second adapters 12 assigned to the same planar wave guide card 15 thereby providing the furcation function or break out function.

The fiber optic transmission channels 16 of the planar waveguide cards 15 provide optical traces being operative to transmit and/or receive optical wavelength signals. The planar waveguide cards 15 leverage the quickest possible route from the first adapter 11 to the second adapters 12 and allow reduction of the depth d₁₀ of the fiber optic furcation module 10 to 5 mm-10 mm.

The permissible bend diameters of optical fibers of an optical fiber assembly are no longer critical (up to 1,6 mm), since with the described, preferred configuration of planar waveguide card 15 small widths of optic transmission channels within the planar waveguide card 15 and tight bend diameters at the same time can be provided.

A planar waveguide card 15 is a member of the waveguide family, to which optical fibers also belong. A planar waveguide card is formed on a plate of substrate. This produces a firm and rigid parallelepiped, which can be very precisely tailored to the needs. The choice of materials, their refractive indexes and other properties are much bigger than in case of optical fibers.

The cladding and core of a planar waveguide card are grown or deposited on the substrate. High refractive index difference can be reached, which leads to an elevated numerical aperture (NA), which in turn allows for low widths of channels and tight bends at the same time.

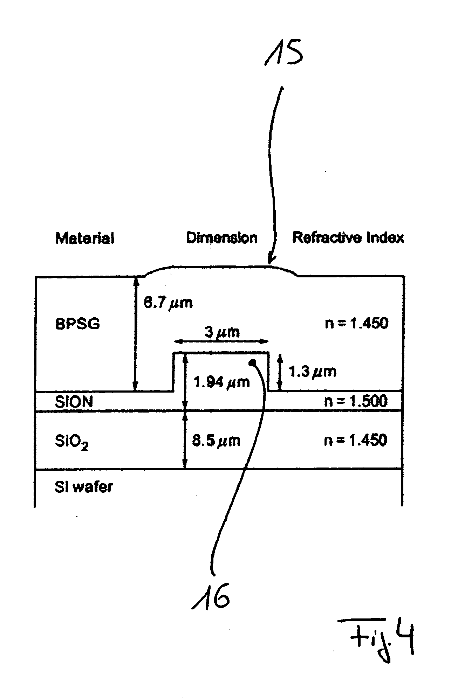

Figure 4 illustrates a preferable layout of the planar waveguide card 15 used in the fiber optic furcation module 10 according to the present invention. In general, a core of the planar waveguide card 15 is buried under the Silicon Glass BPSG and is made of silicone oxynitride SiON.

The refractive index difference is 5%, which together with the thick cladding yields very good transmission capabilities. A substrate of the planar waveguide card 15 is made of pure silicon Si on which the lower cladding layer made from SiO₂ is grown via oxidation.

The exact dimensions that are given guarantee for the 1550 nm wavelength the desired bend diameters and transmission properties for the single mode operation of the waveguide channels 16. However, the dimensions can be amended within the scope of this invention, e.g. to adapt the device to different wavelengths to be transmitted. The distance between fiber optic transmission channels 16 is approximately 6 µm.

The materials and manufacturing of the planar waveguide card 15 can be changed. Is possible to manufacture the core of the planar waveguide card 15 using a sol-gel process, e.g. a metal alkoxide (fluid) is subject to hydrolysis and polymeration, which consequently forms a solid. This is applied to the buried core formation. Further on, it is possible to interchange the materials only by making use of gallium arsenide or indium phosphide.

It should be noted that other layouts of the planar waveguide card 15 can be used. The so-called rib waveguide layout shown in Fig. 4 is preferred, but the invention is not limited to this layout. Other layouts of the planar waveguide card 15 can be a so-called ridge waveguide layout, or a so-called embedded waveguide layout, or a so-called immersed waveguide layout, or a so-called bulge waveguide layout, or a so-called strip-loaded waveguide lay, or a so-called metal or buffered metal waveguide layout.

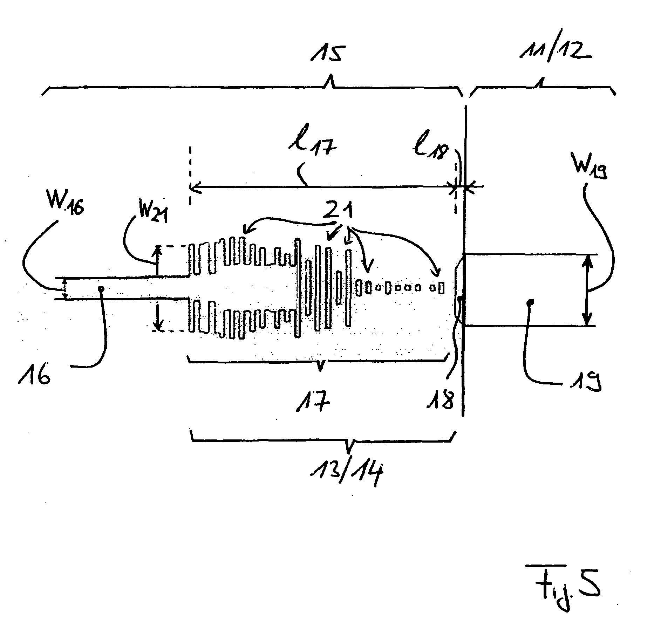

Each adapter port 13, 14 provides a fiber optic interface between a fiber optic transmission channel 16 of the respective planar wave guide card 15 and an optical fiber terminated in a fiber optic connector 11, 12 and being connectable to said adapter port 13, 14 by the respective fiber optic connector 11, 12. Each adapter port 13, 14 (see figure 5) comprises a mode conditioning element 17 and a waveguide funnel 18 in order to provide the desired modes for a low loss coupling.

The mode conditioning element 17 of each adapter port 13, 14 provides the right size of a mode to be transmitted within the fiber optic transmission channel 16 of the respective planar wave guide card 15, as well as on the other hand the right size of the mode to be transmitted within the optical fiber core 19. The mode conditioning element 17 of each adapter port 13, 14 is positioned between a fiber optic transmission channel 16 of the respective planar wave guide card 15 running to the adapter port 13, 14 and the waveguide funnel 18 of said adapter port 13, 14.

The mode conditioning element 17 comprises waveguide stripes 21 that are deposited perpendicularly to the main transmission channel and are specially sized and separated to produce a wave broadening antenna. In such a way, the initial mode field diameter in a transmission channel is elevated which is needed to feed the wave properly into a fiber core 19. On the other hand, the mode conditioning element 17 acts as a wave thinning antenna. In such a way, the initial mode field diameter in an optical fiber core 19 is decreased in order to be fed into the transmission channel 16

The mode conditioning element 17 provides the conversion of the size of the light mode in the following way: When light propagates from the optical fiber - it reduces the mode field diameter from around 10 µm to around 4 µm to be transmitted within a fiber optic transmission channel of the planar wave guide card.

When the light propagates from the fiber optic transmission channel of the planar wave guide - it increases the mode field diameter from around 4 µm to around 10 µm to be transmitted within the optical fiber.

The width w₁₆ of each fiber optic transmission channel 16 of the respective planar wave guide card 15 running to an adapter port 13, 14 is smaller than the width w₁₉ of a fiber core 19 of the optical fiber terminated in a fiber optic connector being connectable to said adapter port 13, 14.

The waveguide funnel 18 of each adapter port 13, 14 provides a smooth transition between the fiber optic transmission channel 16 of the respective planar wave guide card 15 running to an adapter port 13, 14 and the fiber core 19 of the optical fiber terminated in a fiber optic connector being connectable to said adapter port 13, 14.

The waveguide funnel 18 is a 3D structure, on which the fiber core's 19 circumference is almost circumscribed. The waveguide funnel 18 can be produced by an etching process.

In the preferred embodiment, each optic transmission channel 16 provided by a planar wave guide card 15 comprises a width w₁₆ of approximately 3 µm, wherein each fiber core 19 of each optical fiber terminated in a fiber optic connector comprises a width w₁₉ of approximately 8 µm, and wherein the funnel 18 comprising a length I₁₈ of approximately 10 µm providing a smooth transition between the fiber optic transmission channel 16 and the fiber core 19. The mode conditioning element 17 comprising the waveguide stripes 21 comprising a length I₁₇ of approximately 140 µm, whereby the width w₂₁ of the waveguide stripes 21 is varying between approximately 1 µm and approximately 18 µm and whereby the thickness of the waveguide stripes 21 is approximately 2.7 µm. Naturally, the design of the adapter ports 13, 14 according to Figure 4 is used on both sides of the module (multifiber and singlefiber), as the light wave can be sent via it in either direction.

### List of reference numerals

- 10: fiber optic furcation module
- 11: first adapter
- 12: second adapter
- 13: adapter port
- 14: adapter port
- 15: planar wave guide card
- 16: fiber optic transmission channel
- 17: mode conditioning element
- 18: waveguide funnel
- 19: fiber core
- 20: supporting frame
- 21: waveguide stripe

## Claims

1. A fiber optic furcation module, comprising
at least one planar wave guide card (15);
a first adapter (11) assigned to the or each planar wave guide card (15), the or each first adapter (11) comprising a plurality of adapter ports (13) for optical fibers terminated in an optical fiber ribbon connector;
a plurality of second adapters (12) assigned to the or each planar wave guide card (15), each of said second adapters (12) comprising one adapter port or two adapter ports (14), the one or two adapter ports (14) being operative to receive respective single optical fiber connectors terminated with single optical fibers;
a plurality of fiber optic transmission channels (16) provided by the or each planar wave guide card (15), the fiber optic transmission channels (16) providing optical traces being operative to transmit and/or receive optical wavelength signals and connecting each adapter port (13) of a first adapter (11) with an adapter port (14) of one of said second adapters (12).

2. The fiber optic furcation module as claimed in claim 1, wherein the first adapter (11) assigned to each planar wave guide card (15) is an MPO adapter, especially an MTP adapter.

3. The fiber optic furcation module as claimed in claim 1 or 2, wherein said second adapters assigned to each planar wave guide card are simplex adapters each having one adapter port for one optical fiber terminated in a single fiber connector.

4. The fiber optic furcation module as claimed in claim 1 or 2, wherein said second adapters (12) assigned to each planar wave guide card (15) are duplex adapters each having two adapter ports (14) for two optical fibers each terminated in a single fiber connector.

5. The fiber optic furcation module as claimed in one of claims 1 to 4, wherein each adapter port (13, 14) provides a fiber optic interface between a fiber optic transmission channel (16) of the respective planar wave guide card (15) and an optical fiber terminated in a fiber optic connector and being connectable to said adapter port (13, 14) by the respective fiber optic connector.

6. The fiber optic furcation module as claimed in one of claims 1 to 5, wherein each adapter port (13, 14) comprises a mode conditioning element (17) and a waveguide funnel (18).

7. The fiber optic furcation module as claimed in claim 6, wherein said mode conditioning element (17) of each adapter port (13, 14) provides the right size of the light mode to be transmitted within the fiber optic transmission channel (16) of the respective planar wave guide card (15), as well as the right size of the light mode to be transmitted within the a fiber core (19) of the optical fiber terminated in a fiber optic connector being connectable to said adapter port (13, 14).

8. The fiber optic furcation module as claimed in claim 6 or 7, wherein the mode conditioning element (17) of each adapter port (13, 14) is positioned between a fiber optic transmission channel (16) of the respective planar wave guide card (15) running to the adapter port (13, 14) and the waveguide funnel (18) of said adapter port (13, 14).

9. The fiber optic furcation module as claimed in one of claims 1 to 8, wherein the width of each fiber optic transmission channel (16) of the respective planar wave guide card (15) running to an adapter port (13, 14) is smaller than the width of a fiber core (19) of the optical fiber terminated in a fiber optic connector being connectable to said adapter port (13, 14).

10. The fiber optic furcation module as claimed in one of claims 6 to 9, wherein the waveguide funnel (18) of each adapter port (13, 14) provides a smooth transition between the fiber optic transmission channel (16) of the respective planar wave guide card (15) running to an adapter port (13, 14) and the fiber core (19) of the optical fiber terminated in a fiber optic connector being connectable to said adapter port (13, 14).

11. The fiber optic furcation module as claimed in claim 10, wherein each optic transmission channel (16) provided by a planar wave guide card (15) comprises a width of approximately 3 µm, wherein each fiber core (19) of each optical fiber terminated in a fiber optic connector comprises a width of approximately 8 µm, and wherein the waveguide funnel (18) comprising a length of approximately 10 µm provides a smooth transition between the fiber optic transmission channel and the fiber core.

12. The fiber optic furcation module as claimed in one of claims 1 to 11, wherein said first adapter (11) and said plurality of second adapters (12) are assigned to opposite sides of the planar wave guide card (15).

13. The fiber optic furcation module as claimed in one of claims 1 to 11, wherein said first adapter and said plurality of second adapters are assigned to the same side of the planar wave guide card.

14. The fiber optic furcation module as claimed in one of claims 1 to 13, comprising two mechanically cascaded planar wave guide cards, each comprising a first adapter (11), a plurality of second adapters (12) and fiber optic transmission channels (16), whereby a first planar wave guide card (15) is mounted to a supporting frame (20) and whereby a second planar wave guide card (15) is mounted to the first planar wave guide card (15).
